# EUROPEAN PATENT APPLICATION

(11) **EP 1 686 753 A1**
(43) Date of publication of application: **02.08.2006**
(21) Application number: 04818908.8
(22) Date of filing: 17.11.2004
(51) Int. Cl.: H04L 29/02

(54) **RADIO COMMUNICATION SYSTEM, METHOD FOR CONTROLLING TRANSMISSION OF RECEPTION ACKNOWLEDGEMENT SIGNAL, AND RADIO STATION USED THEREIN**

(30) Priority: 19.11.2003 JP 2003388624
(71) Applicant: NEC CORPORATION, Minato-ku, Tokyo 108-8001 (JP)
(72) Inventor: MIYAMOTO, Hiroaki, c/o NEC Corporation, Tokyo 108-8001 (JP)
(74) Representative: Betten, Jürgen
(86) International application number: PCT/JP2004/017047
(87) International publication number: WO 2005/050942

(57) **Abstract**

In a wireless LAN communication system in which the data transmission rate is asymmetric between an upstream channel and a downstream channel, a wireless band is effectively used. The transmission rate of an ACK (reception acknowledgement signal) is variably controlled between an AP (Access Point) and an STA (mobile terminal station), based on the number of retransmissions of a user data frame. Specifically, control is performed as follows. The number of retransmitted frames is counted, and if the value is greater than a predetermined value M, which means that the transmission quality of an ACK is poor, the ACK transmission rate is brought one level down. The number of successive successful frames is counted, and if the value is greater than a predetermined value N, which means that the transmission quality is good, the transmission rate is brought one level up. By this, although conventionally the ACK transmission rate is determined depending on the reception rate of a data frame, the ACK transmission rate is independently determined. Thus, the fast data transmission rate of a downstream channel does not depend on the ACK transmission rate and accordingly a limited wireless communication band is effectively used.

## Description

### TECHNICAL FIELD

The present invention relates to a wireless communication system, a method of controlling transmission of a reception acknowledgement signal and a wireless station used in such a system and a method. In particular, the present invention relates to a scheme of controlling the transmission rate of an ACK frame for reception acknowledgement in a wireless LAN communication system.

### BACKGROUND ART

In wireless LAN devices (including an access point (AP) and a mobile terminal (STA) and generically referred to as wireless stations) in a wireless LAN communication system, rate control is performed such that when a successful unicast data transmission state continues, the transmission rate is increased to realize fast wireless communication, and when, in contrast, a transmission failure state continues, the transmission rate is reduced to ensure a stable communication state. This successful transmission state is determined by successful reception of an ACK (Acknowledgement) frame, and the transmission failure state is determined by failure of reception of an ACK frame (hereinafter simply referred to as an ACK).

A method of controlling the ACK transmission rate defined by IEEE 802.11 defines that when user data is 54 Mbps, 48 Mbps, 36 Mbps, 24 Mbps, 18 Mbps, or 9 Mbps, an ACK is transmitted at a transmission rate of 24 Mbps; when user data is 12 Mbps, an ACK is transmitted at a transmission rate of 12 Mbps; and when user data is 6 Mbps, an ACK is transmitted at a transmission rate of 6 Mbps.

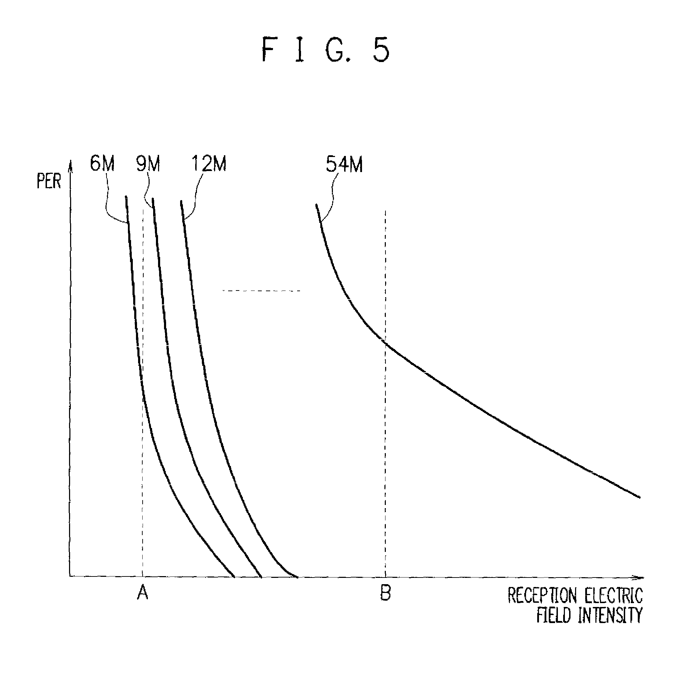

In such an ACK rate control method, although there is no problem when the AP and the STA perform transmission at the same transmission power, a problem arises in the following case. Specifically, for outdoor wireless LAN devices and the like, there is a need to increase the transmission power of the AP to extend coverage. Here, since the transmission power of the AP is increased and the transmission power of the STA is reduced, the STA can strongly receive a signal from the AP, and at the AP a signal received from the STA is weak. In such a case, as shown in the characteristics of a reception electric field intensity against PER (Packet Error Rate) of FIG. 5, since the transmission power of the AP is large, the STA is receivable in a reception electric field intensity shown by B of FIG. 5 and can perform demodulation at a rate of 54 Mbps. On the other hand, since the transmission power of the STA is small, the AP is receivable in a reception electric field intensity shown by A of FIG. 5 and can perform demodulation only at a rate of 6 Mbps.

As such, when the transmission power of the AP is larger than that of the STA, i.e., a scheme in which the transmission power of the AP and the transmission power of the STA are asymmetric, and the transmission rate of downstream data from the AP is 54 Mbps and the transmission rate of upstream data from the STA is 6 Mbps (when the communication rates are asymmetric), since, in the aforementioned ACK rate control method defined by IEEE 802.11, the ACK transmission rate is determined by the reception rate of a unicast data frame and the retransmission control and rate control in transmission of a unicast data frame are performed by a response of an ACK, the transmission rate of an AP unicast data frame is drawn to the transmission rate of the ACK of 6 Mbps and accordingly the transmission rate of the unicast data frame also becomes 6 Mbps. As a result, the asymmetry of the communication rates (a scheme in which the transmission rate of downstream data is greater than that of upstream data) cannot be realized and thus the effective use of a limited communication band cannot be achieved.

Japanese Patent Application Laid-Open No. 2001-257715 (Patent document 1) discloses a technique that in a system where data is transmitted from a transmission terminal to a reception terminal and the reception terminal accumulates received data into a buffer and sequentially reads and reproduces the accumulated data, the transmission rate of data is controlled based on information added to an ACK from the reception terminal, i.e., information indicating the amount of accumulated data. Japanese Patent Application Laid-Open No. 2002-064504 (Patent document 2) discloses a technique of controlling, in communication between a wireless LAN base station and a plurality of wireless LAN terminals, the amount of transmission data to equalize the respective communication rates of the wireless LAN terminals.

### DISCLOSURE OF THE INVENTION

### PROBLEMS TO BE SOLVED BY THE INVENTION

According to IEEE 802.11, in communication between an AP (Access Point) and an STA (Station), which is a mobile terminal station, in a wireless LAN communication system, an ACK is returned in response to a received signal. However, when the transmission power differs between the AP and the STA, the upstream communication rate and the downstream communication rate may become asymmetric. In communication between wireless LAN devices in such an environment, since, as described above, the transmission rate of a data frame of the AP is drawn to the transmission rate of an ACK, the transmission rate of the data frame of the AP becomes that of the STA which is lower than the transmission rate of the data frame of the AP. As a result, the asymmetry of the communication rates cannot be realized and thus the effective use of a communication band cannot be achieved. From the viewpoint of the effective use of a band in communication between wireless LAN devices, unicast data frame transmission using a stable, highest rate and stable, high-speed ACK rate transmission are key issues.

Both of the techniques disclosed in the aforementioned patent documents 1 and 2 involve controlling the rate of transmission data between communication devices. Thus, as described above, both techniques are not based on the viewpoint of the effective use of a communication band, focusing on the transmission rate of an ACK in the asymmetry of the transmission rates between communication devices.

Therefore, the present invention is made in view of the effective use of a communication band, focusing on such an ACK transmission rate. An object of the present invention is to provide a wireless communication system and a method of controlling transmission of a reception acknowledgement signal and a wireless station used in such a system and a method, in which unicast data frame transmission using a stable, highest rate and stable, high-speed ACK transmission are performed, whereby the effective use of a communication band between wireless LAN devices having asymmetric communication rates is made possible.

### MEANS TO SOLVE THE PROBLEMS

According to one aspect of the present invention, there is provided a wireless communication system in which a wireless station transmits a reception acknowledgement signal in response to a data frame from another wireless station, the system comprising control means of controlling a transmission rate of the reception acknowledgement signal based on the number of retransmissions of the data frame.

According to another aspect of the present invention, there is provided a method of controlling transmission of a reception acknowledgement signal in a wireless communication system in which a wireless station transmits a reception acknowledgement signal in response to reception of a data frame from another wireless station, the method comprising the step of controlling a transmission rate of the reception acknowledgement signal based on the number of retransmissions of the data frame.

According to still another aspect of the present invention, there is provided a wireless station that transmits a reception acknowledgement signal in response to a data frame transmitted from another wireless station, the wireless station comprising means of controlling a transmission rate of the reception acknowledgement signal based on the number of retransmissions of the data frame.

According to yet another aspect of the present invention, there is provided a program that allows a computer to perform an operation of a wireless station that transmits a reception acknowledgement signal in response to a data frame transmitted from another wireless station, the program comprising a process of controlling a transmission rate of the reception acknowledgement signal based on the number of retransmissions of the data frame.

A function of the present invention will be described. The ACK transmission rate is controlled independently of the transmission rate of a unicast data frame and based on the number of retransmissions of the unicast data frame, whereby in a wireless LAN system having the asymmetry of communication rates the transmission rate of an ACK frame can be optimized, achieving the effective use of a communication band.

### EFFECT OF THE INVENTION

According to the present invention, by controlling the ACK rate without depending on the rate of a unicast data frame which is a user frame, but based on the number of retransmissions (the number of re-receptions) of the unicast data frame, the communication quality of an ACK can be controlled, providing effects that a limited wireless communication band can be effectively used and the communication quality can be stabilized.

Conventionally (IEEE 802.11), the ACK transmission rate is determined by the reception rate of a unicast data frame rate and the retransmission control and rate control in transmission of a unicast data frame are performed by a response of an ACK, and thus, the transmission of the unicast data frame is affected by the ACK transmission rate (i.e., the communication quality of the ACK). On the other hand, according to the present invention, the ACK transmission rate is controlled independently of the rate of a unicast data frame, providing an effect that the effective use of a limited wireless communication band is made possible.

### BEST MODE FOR CARRYING OUT THE INVENTION

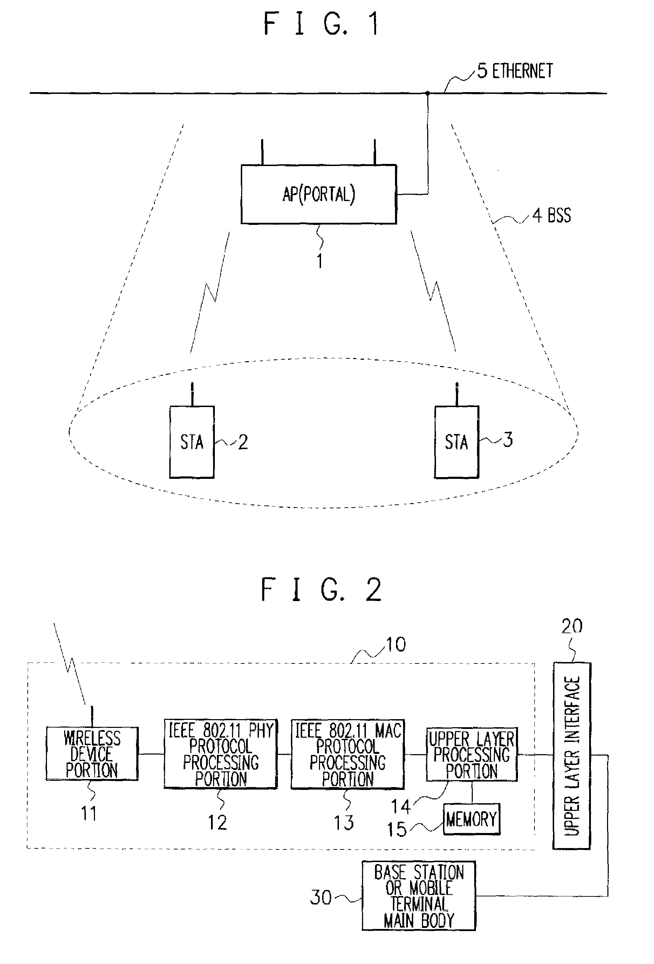

An embodiment of the present invention will be described in detail below with reference to the drawings. FIG. 1 is a schematic diagram of a wireless LAN communication system to which the embodiment of the present invention is applied. The system includes an AP 1 and a plurality of STAs 2 and 3 existing under (belonging to) the AP 1, and is an infrastructure network as defined by IEEE 802.11. The minimum unit of such a wireless LAN network is referred to as a BSS (Basic Service Set) 4. By the AP 1 being connected via Ethernet (Trademark) 5 to a base station which is not shown, the STAs 2 and 3 existing under the AP 1 can establish a wireless connection with the Internet which is not shown.

Note that the AP 1 is expressed as "Portal", which indicates that the AP 1 is a base station terminal that allows a connection between the STAs 2 and 3 and a wired LAN such as Ethernet (Trademark) 5 to be established by adding to the AP 1 a protocol conversion function between an IEEE 802.11 LAN protocol and other LAN protocols.

The AP 1 realizes, by a wireless base station 30, the process of higher protocols such as TCP/IP (Transmission Control Protocol/Internet Protocol) and various applications, through a wireless LAN card 10 and an upper layer interface 20 shown in FIG. 2. The STAs 2 and 3 similarly realize, by a mobile terminal main body 30 (e.g., a portable information processing device such as a notebook type personal computer), the process of higher protocols such as TCP/IP and various applications, through the wireless LAN card 10 and the upper layer interface 20 shown in FIG. 2. FIG. 2 is a functional block diagram of the wireless LAN card used in the AP 1 and the STAs 2 and 3.

The wireless LAN card 10 shown in FIG. 2 includes a wireless device portion 11 that performs frame transmission/reception in a wireless zone; an IEEE 802.11 PHY protocol processing portion 12 that performs a modulation/demodulation process; an IEEE 802.11 MAC protocol processing portion 13 that performs access control in a MAC (Medium Access Control) layer; and an upper layer processing portion 14 that realizes an SME (Station Management Entity) process, such as an authentication process in the MAC layer, by a built-in CPU and a memory 15.

Upon frame transmission, the IEEE 802.11 MAC protocol processing portion 13 converts a transmission request frame from the upper layer processing portion 14 into a MAC frame format which complies with an IEEE 802.11 MAC protocol. Subsequently, the IEEE 802.11 PHY protocol processing portion 12 performs a modulation process on the MAC frame and then sends out the frame into the air via the wireless device portion 11, whereby the transmission process is completed.

Upon frame reception, the IEEE 802.11 MAC protocol processing portion 13 performs processes, such as a CRC 32 calculation on a received MAC frame having been passed through the wireless device portion 11 and having been subjected to a demodulation process by the IEEE 802.11 PHY protocol processing portion 12, an analysis of a content of a MAC header and a rate determination on the received frame, and acquisition of a sequence number of the frame, and then provides notification about a frame body field to an upper layer.

The transmission rate upon communication between the AP and the STAs is selected, based on the communication rate and quality, from eight types (6, 9, 12, 18, 24, 36, 48, and 54 [Mbps]) for IEEE 802.11a which is a 5 GHz band wireless LAN standard or from four types (1, 2, 5.5, and 11 [Mbps]) for IEEE 802.11b which is a 2.4 GHz band wireless LAN standard. An ACK frame is returned in response to a received signal. In order to realize the asymmetry of the communication rates, the rate of the ACK frame needs to be controlled. In addition, by optimizing a transmission rate of the ACK frame, the effective use of a communication band is made possible. The portion that realizes a function for them is the IEEE 802.11 MAC protocol processing portion 13 of FIG. 2, whose specific functional block diagram and operational processing flow are shown in FIGS. 3 and 4, respectively.

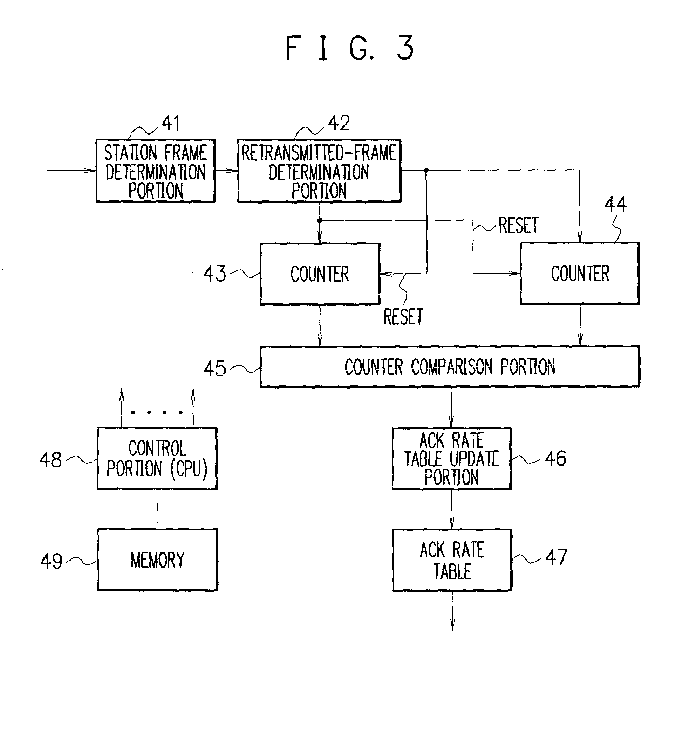

First, with reference to FIG. 3, an ACK transmission rate control functional block according to the embodiment of the present invention in the IEEE 802.11 MAC protocol processing portion 13 will be described. A station frame determination portion 41 of a station determines whether a unicast data frame (hereinafter simply referred to as a frame) inputted to the station is destined for the station. A retransmitted-frame determination portion 42 determines whether the frame determined, by the station frame determination portion 41, to be a frame destined for the station is a retransmitted frame.

A counter 43 counts the number of successive retransmissions of the frame determined to be a retransmitted frame by the retransmitted-frame determination portion 42. If the frame is determined not to be a retransmitted frame, a counter 44 counts the number of successive successful frames. Note that the counter 43 is reset when the frame is determined not to be a retransmitted frame and the counter 44 is reset when the frame is determined to be a retransmitted frame.

A counter comparison portion 45 compares the respective counter values of the counters 43 and 44 with predetermined values M and N, respectively. An ACK rate table update portion 46 controls to update an ACK rate table 47 according to a comparison effect from the counter comparison portion 45. Then, the transmission rate of an ACK is determined by a value in the ACK rate table 47. Note that a control portion (CPU) 48 controls each of the portions 41 to 47 and performs a single control operation according to the steps of software (program) stored in advance in a memory 49.

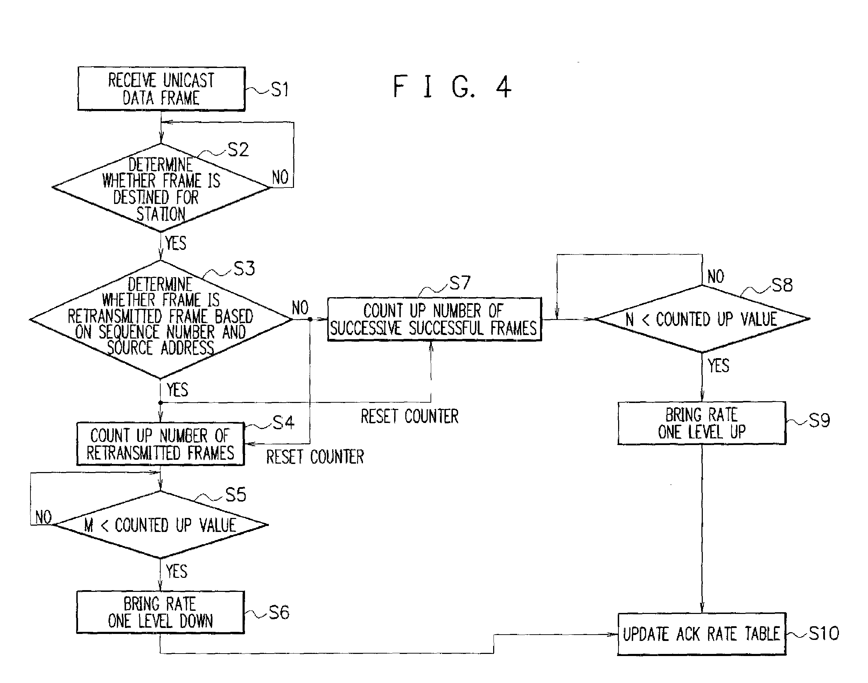

A wireless LAN device having received a unicast data frame transmits an ACK frame as a response frame. A method of optimizing the rate of the ACK frame by changing the rate will be described below with reference to FIG. 4.

When a device receives a unicast frame (step S1), the device reads a MAC address and determines whether the frame is destined for the device (step S2). If the frame is destined for the device, the device checks a sequence number and a source MAC address in a sequence control field which are defined by IEEE 802.11, and thereby determines whether the frame is a retransmitted frame (step S3).

If the frame is a retransmitted frame, the device counts up the number of successive retransmissions (step S4). If the counter value exceeds M times which is arbitrarily set (step S5), the device determines that an ACK has not been received and thus updates an ACK rate table so as to bring the ACK transmission rate one level down (steps S6 and S10). Based on update information in the ACK rate table, the device determines the ACK transmission rate.

If, at step S3, the frame is determined not to be a retransmitted frame, the device counts up the number of successive successful frames (step S7). If the counter number exceeds arbitrary N times, the device determines that an ACK has been safely received by an intended device (step S8). In order to further increase transmission efficiency, the device updates the ACK rate table so as to bring the rate one level up (steps S9 and S10) and determines the ACK transmission rate.

In this way, the ACK transmission rate is controlled independently of the transmission rate of a unicast data frame and based on the number of retransmissions of the unicast data frame. Therefore, in a wireless LAN system having the asymmetry of communication rates, the transmission rate of an ACK frame can be optimized, achieving the effective use of a communication band.

In the aforementioned IEEE standard, since the transmission rate of a unicast data frame which is a user data frame is drawn (pulled) to the ACK transmission rate, even when communication can be performed at an ACK transmission rate of 54 Mbps, if the communication rate of a unicast data frame is 54 Mbps, 48 Mbps, 36 Mbps, 24 Mbps, 18 Mbps, or 9 Mbps, due to the fact that the ACK transmission rate is defined as 24 Mbps, ACK's data frame becomes long. However, as in the aforementioned embodiment, by performing ACK transmission rate control in an independent manner, it is possible, for example, to return an ACK with 54 Mbps in response to a unicast data frame with 54 Mbps. Accordingly, the period of time during which a transmission band is occupied is reduced by an amount equal to the time saved, achieving the effective use of a communication band.

Although in the embodiment shown in the foregoing FIG. 4 the count values N and M for retransmitted frames and successive successful frames are fixed, by automatically updating the value of M at step S5 and the value of N at step S8 based on the update conditions of the ACK table at step S10, more stable communication can be performed. For example, in the case in which communication is stable when an ACK is 6 Mbps, successes continue and thus an operation of bringing the rate one level up is performed, resulting in 9 Mbps. At 9 Mbps an ACK frame cannot be received by an intended station and thus the rate is brought one level down, resulting in 6 Mbps. This operation is repeated. The repetition is monitored at step S10 of updating the ACK rate table and the values of M and N are updated, which can be implemented as another embodiment.

It is obvious that the aforementioned operation shown in the flowchart of FIG. 4 can be stored in advance as a program in a storage medium such as a ROM, and a computer (CPU) can be allowed to read and execute the program.

### BRIEF DESCRIPTION OF THE DRAWINGS

FIG. 1 is a schematic system configuration diagram of an embodiment of the present invention.
FIG. 2 is a functional block diagram of a wireless LAN card used in a wireless LAN device in the embodiment of the present invention.
FIG. 3 is a functional block diagram of the embodiment of the present invention.
FIG. 4 is a flowchart showing an operation in the embodiment of the present invention.
FIG. 5 is a diagram for explaining a relationship between a PER (received packet error rate) and a reception electric field intensity for the transmission rates of various frames (packets) in a wireless LAN communication system.

### DESCRIPTION OF REFERENCE NUMERALS

- 1: AP (Access Point)
- 2, 3: STA (mobile terminal station)
- 10: Wireless LAN card
- 11: Wireless device portion
- 12: IEEE 802.11 PHY protocol processing portion
- 13: IEEE 802.11 MAC protocol processing portion
- 14: Upper layer processing portion
- 15, 49: Memory
- 20: Upper layer interface
- 30: Base station or mobile terminal main body
- 41: Station frame determination portion
- 42: Retransmitted-frame determination portion
- 43, 44: Counter
- 45: Counter comparison portion
- 46: ACK rate table update portion
- 47: ACK rate table
- 48: Control portion (CPU)

## Claims

1. A wireless communication system in which a wireless station transmits a reception acknowledgement signal in response to reception of a data frame from another wireless station, the system comprising means of controlling a transmission rate of the reception acknowledgement signal based on the number of retransmissions of the data frame.

2. The wireless communication system according to claim 1, wherein the means controls the transmission rate of the reception acknowledgement signal based on the number of retransmissions of the data frame.

3. The wireless communication system according to claim 2, wherein the means makes the transmission rate lower than a current transmission rate when the number of retransmissions of the data frame is greater than a first predetermined value.

4. The wireless communication system according to any one of claims 1 to 3, wherein the means controls the transmission rate of the reception acknowledgement signal based on the number of successive successes for the data frame.

5. The wireless communication system according to claim 4, wherein the means makes the transmission rate higher than the current transmission rate when the number of successive successes for the data frame is greater than a second predetermined value.

6. The wireless communication system according to any one of claims 1 to 5, wherein the wireless station and another wireless station are an access point and a mobile communication terminal in a wireless LAN system.

7. A method of controlling transmission of a reception acknowledgement signal in a wireless communication system in which a wireless station transmits a reception acknowledgement signal in response to reception of a data frame from another wireless station, the method comprising the step of controlling a transmission rate of the reception acknowledgement signal based on the number of retransmissions of the data frame.

8. The method of controlling transmission of a reception acknowledgement signal according to claim 7, wherein in the step the transmission rate of the reception acknowledgement signal is controlled based on the number of retransmissions of the data frame.

9. The method of controlling transmission of a reception acknowledgement signal according to claim 8, wherein in the step the transmission rate is made lower than a current transmission rate when the number of retransmissions of the data frame is greater than a first predetermined value.

10. The method of controlling transmission of a reception acknowledgement signal according to any one of claims 7 to 9, wherein in the step the transmission rate of the reception acknowledgement signal is controlled based on the number of successive successes for the data frame.

11. The method of controlling transmission of a reception acknowledgement signal according to claim 10, wherein in the step the transmission rate is made higher than the current transmission rate when the number of successive successes for the data frame is greater than a second predetermined value.

12. The method of controlling transmission of a reception acknowledgement signal according to any one of claims 7 to 11, wherein the wireless station and another wireless station are an access point and a mobile communication terminal in a wireless LAN system.

13. A wireless station that transmits a reception acknowledgement signal in response to a data frame transmitted from another wireless station, the wireless station comprising means of controlling a transmission rate of the reception acknowledgement signal based on the number of retransmissions of the data frame.

14. The wireless station according to claim 13, wherein the means controls the transmission rate of the reception acknowledgement signal based on the number of retransmissions of the data frame.

15. The wireless station according to claim 14, wherein the means makes the transmission rate lower than a current transmission rate when the number of retransmissions of the data frame is greater than a first predetermined value.

16. The wireless station according to any one of claims 13 to 15, wherein the means controls the transmission rate of the reception acknowledgement signal based on the number of successive successes for the data frame.

17. The wireless station according to claim 16, wherein the means makes the transmission rate higher than the current transmission rate when the number of successive successes for the data frame is greater than a second predetermined value.

18. The wireless station according to any one of claims 13 to 17, wherein the wireless station is one of an access point and a mobile communication terminal in a wireless LAN system.

19. A program that allows a computer to perform an operation of a wireless station that transmits a reception acknowledgement signal in response to a data frame transmitted from another wireless station, the program comprising a process of controlling a transmission rate of the reception acknowledgement signal based on the number of retransmissions of the data frame.
